# EUROPÄISCHE PATENTSCHRIFT

(11) **EP 1 645 409 B1**
(45) Veröffentlichungstag und Bekanntmachung des Hinweises auf die Patenterteilung: **16.01.2008**
(21) Anmeldenummer: 05108054.7
(22) Anmeldetag: 02.09.2005
(51) Int. Cl.: B32B 1/08, B32B 7/12, F16L 9/12, F16L 11/04, C08L 77/10, C08L 77/06, C08F 8/00, C08L 51/06

(54) **Mehrschichtverbund mit Polyesterschicht und Schutzschicht**
Laminate comprising a polyester type protective layer
Structure multicouche comprenant une couche de protection à base de polyester

(30) Priorität: 07.10.2004 DE 102004048777
(43) Veröffentlichungstag der Anmeldung: 12.04.2006
(73) Patentinhaber: Evonik Degussa GmbH, 40474 Düsseldorf (DE)
(72) Erfinder: Schmitz, Guido, Dr., 48249, Dülmen (DE); Häger, Harald, Dr., 63579, Freigericht (DE); Ries, Hans, Dr., 45772, Marl (DE)

(56) Entgegenhaltungen:
- EP-A- 1 333 211
- US-A1- 2001 018 105
- US-B1- 6 355 321
- US-B1- 6 355 358

## Beschreibung

Gegenstand der Erfindung ist ein Mehrschichtverbund, der eine Sperrschicht aus einem thermoplastischen Polyester sowie eine Schutzschicht aus einem gegen Alkohole sperrenden Material besitzt, das ausgewählt ist aus einem Fluorpolymer und einem Polyolefin.

Bei der Entwicklung von Mehrschichtverbunden, die zum Beispiel als Rohr zur Führung flüssiger oder gasförmiger Medien in Kraftfahrzeugen eingesetzt werden, müssen die verwendeten Formmassen eine ausreichende chemische Beständigkeit gegenüber den zu führenden Medien aufweisen, und die Rohre müssen allen an sie gestellten mechanischen Anforderungen auch nach langfristiger Beanspruchung durch Kraftstoffe, Öle oder Temperatureinwirkung gewachsen sein. Neben der Forderung nach einer ausreichenden Kraftstoffbeständigkeit wird durch die Automobilindustrie eine verbesserte Sperrwirkung der Kraftstoffleitungen verlangt, um die Emissionen von Kohlenwasserstoffen in der Umwelt zu reduzieren. Dies hat zur Entwicklung von Mehrschichtrohrsystemen geführt, bei denen beispielsweise ein thermoplastischer Polyester als Sperrschichtwerkstoff zum Einsatz kommt. Entsprechende Systeme sind beispielsweise in der EP-A-0 509 211, der EP-A-0 569 681 und der EP-A-1 065 048 beschrieben. Allerdings weisen diese bekannten Rohre den Nachteil auf, dass Polyesterformmassen alkoholyse- und hydrolyseanfällig sind und bei Verwendung von alkoholhaltigem Kraftstoff mit der Zeit ihre gute mechanische Festigkeit verlieren können.

Zur Lösung dieses Problems schlägt die EP-A-0 637 509 vor, als innerste Schicht eine Fluorpolymerschicht anzubringen, die die Polyesterschicht vor Wasser und Alkoholen schützt. Fluorpolymer- und Polyesterschicht werden durch einen Haftvermittler miteinander verbunden. Als Haftvermittler werden Mischungen offenbart, die einerseits ein Fluorpolymer, flexibles Fluorpolymer oder einen Fluorkautschuk und andererseits einen kristallinen Polyester oder ein Polyesterelastomer enthalten. Darüber hinaus können ein thermoplastisches Polyurethan, ein Polyamidelastomer, ein modifiziertes Polyolefin oder ein "miscibilizer" enthalten sein, der beispielsweise Epoxy-, Säureanhydrid-, Oxazolin-, Isocyanat-, Carbonsäure- oder Aminogruppen besitzt. Es wird aber nicht belegt, ob damit überhaupt eine Haftung erzielt wird, von einer permanenten Haftung ganz abgesehen. Aufgrund der offenbarten Bestandteile, die teilweise in Kraftstoffen löslich sind, weisen diese Haftvermittler eine nicht ausreichende Kraftstoffbeständigkeit auf. Darüber hinaus kann anhand der sehr allgemeinen Angaben die Lehre der EP 0 637 509 in diesem Punkt vom Fachmann nicht ohne weiteres nachgearbeitet werden.

Eine andere technische Lösung wird in der DE-OS 43 36 289 beschrieben. Dort werden die Polyesterschicht und die innenliegende Fluorpolymerschicht durch zwei aufeinanderfolgende Haftvermittlerschichten miteinander verbunden. Derartige komplexe Systeme sind jedoch nur aufwendig herstellbar.

In Abwandlung hiervon ist auch eine polyolefinische Innenschicht in der Lage, eine Polyesterschicht vor der Einwirkung von Wasser und Alkohol zu schützen. Aber auch hier stellt sich das Problem, dass eine ausreichende Haftung erzielt werden muss.

Die US 2001/018105 A1 beschreibt Mehrschichtrohre, bei denen eine Schicht aus einer Polyolefinformmasse und eine Schicht aus einer Polyesterformmasse über einen reaktive Gruppen enthaltenden Haftvermittler miteinander verbunden sind. Um eine Haftung zu gewährleisten, muss die Polyesterformmasse bestimmte reaktive Zusätze enthalten.

Darüber hinaus wird in der EP-A-1 333 211 ein Rohr mit einer Polyolefin-Außenschicht und einer Polyester-Innenschicht offenbart, bei dem beide Schichten über mindestens eine Haftvermittlerschicht miteinander verbunden sind. Für die Ausführungsform mit einer einzigen Haftvermittlerschicht werden hierfür keine geeigneten Zusammensetzungen angegeben.

Demgemäss stellte sich die Aufgabe, einen Haftvermittler zu entwickeln, der eine gute Haftung zwischen der Polyesterschicht und der Schutzschicht ermöglicht. Darüber hinaus bestand die Aufgabe, eine Haftung zu ermöglichen, die durch Kontakt mit Kraftstoff nicht beeinträchtigt wird. Weiterhin sollte die Haftung während der Gebrauchsdauer des Verbunds in ausreichendem Maße erhalten bleiben. Insgesamt sollte dabei eine möglichst einfache technische Lösung angestrebt werden.

Diese Aufgaben wurden gelöst durch einen Mehrschichtverbund, der folgende Schichten enthält:
I. Eine innere Schicht I, ausgewählt aus einer gegebenenfalls haftungsmodifizierten Fluorpolymer-Formmasse und einer gegebenenfalls haftungsmodifizierten Polyolefin-Formmasse;
II. eine Haftvermittlerschicht II, die folgende Zusammensetzung aufweist:
   a) 2 bis 80 Gew.-Teile, bevorzugt 4 bis 60 Gew.-Teile und besonders bevorzugt 6 bis 40 Gew.-Teile eines Pfropfcopolymers, das unter Verwendung folgender Monomerer hergestellt wird:
      - 0,5 bis 25 Gew.-%, bezogen auf das Pfropfcopolymer, eines Polyamins mit mindestens 4, bevorzugt mindestens 8 und besonders bevorzugt mindestens 11 Stickstoffatomen und einem zahlenmittleren Molekulargewicht Mₙ von bevorzugt mindestens 146 g/mol, besonders bevorzugt mindestens 500 g/mol und insbesondere bevorzugt von mindestens 800 g/mol sowie
      - polyamidbildende Monomere, ausgewählt aus Lactamen, ω-Aminocarbonsäuren und/oder äquimolaren Kombinationen von Diamin und Dicarbonsäure;
   b) 0 bis 85 Gew.-Teile, bevorzugt 10 bis 75 Gew.-Teile und besonders bevorzugt 25 bis 65 Gew.-Teile, eines Polyesters,
   c) 0 bis 85 Gew.-Teile eines Polymeren, ausgewählt aus Polyamiden, Fluorpolymeren und Polyolefinen,
      wobei die Summe der Gew.-Teile von a), b) und c) 100 ergibt;
   d) maximal 50 Gew.-Teile, bevorzugt maximal 30 Gew.-Teile und besonders bevorzugt maximal 20 Gew.-Teile Zusatzstoffe, ausgewählt aus schlagzähmachendem Kautschuk und/oder üblichen Hilfs- bzw. Zuschlagstoffen;
III. eine Schicht III aus einer Polyester-Formmasse.

Von der Komponente II.c) werden bevorzugt 5 bis 75 Gew.-Teile, besonders bevorzugt 10 bis 65 Gew.-Teile und insbesondere bevorzugt 20 bis 55 Gew.-Teile verwendet.

Der Mehrschichtverbund ist im allgemeinen ein Rohr oder ein Hohlkörper.

Das für die Schicht I verwendete Fluorpolymere kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Tetrafluorethylen-Hexafluorpropen-Vinylidenfluorid-Copolymer (THV), ein Tetrafluorethylen-Hexafluorpropen-Copolymer (FEP) oder ein Tetrafluorethylen-Perfluoralkylvinylether-Copolymer (PFA) sein.

Wenn der Haftvermittler der Schicht II selbst kein Fluorpolymer in ausreichender Menge enthält, so ist das Fluorpolymer der Schicht I vorzugsweise haftungsmodifiziert, das heißt, dass funktionelle Gruppen vorhanden sind, die mit Aminogruppen des Haftvermittlers reagieren können und somit eine Phasenanbindung ermöglichen. Eine derartige Haftungsmodifizierung ist generell auf zwei Wegen möglich:
- Entweder enthält das Fluorpolymer eingebaute funktionelle Gruppen, beispielsweise Säureanhydridgruppen oder Carbonatgruppen, wie in der US 5 576 106, der US-A-2003148125, der US-A-2003035914, der US-A-2002104575, der JP-A-10311461, der EP-A-0 726 293, der EP-A-0 992 518 oder der WO 9728394 beschrieben;
- oder die Fluorpolymer-Formasse enthält ein mit dem Fluorpolymer mischbares oder zumindest verträgliches Polymeres, das funktionelle Gruppen enthält. Derartige Systeme sind beispielsweise in der EP-A-0 637 511 bzw. der hierzu äquivalenten US 5 510 160 sowie in der EP-A-0 673 762 bzw. der hierzu äquivalenten US 5 554 426 offenbart, auf die hiermit ausdrücklich Bezug genommen wird. Das modifizierte Fluorpolymer der EP-A-0 673 762 besteht aus
- 97,5 bis 50 Gew.-%, bevorzugt 97,5 bis 80 Gew.-% und besonders bevorzugt 96 bis 90 Gew.-% PVDF sowie
- 2,5 bis 50 Gew.-%, bevorzugt 2,5 bis 20 Gew.-% und besonders bevorzugt 4 bis 10 Gew.-% eines Acrylatcopolymers, das mindestens folgende Grundbausteine aufweist:
   i) 14 bis 85 Gew.-% Esterbausteine,
   ii) 0 bis 75 Gew.-% Imidbausteine,
   iii) 0 bis 15 Gew.-% Carbonsäurebausteine und
   iiii) 7 bis 20 Gew.-Teile Carbonsäureanhydridbausteine.

Bezüglich näherer Einzelheiten sei auf die in Bezug genommenen Schriften verwiesen, deren Inhalt ausdrücklich zum Offenbarungsgehalt der vorliegenden Anmeldung gehören soll.

Das für die Schicht I alternativ verwendete Polyolefin kann in erster Linie ein Polyethylen, insbesondere ein Polyethylen hoher Dichte (HDPE), oder ein isotaktisches Polypropylen sein. Das Polypropylen kann hierbei ein Homo- oder ein Copolymer sein, beispielsweise mit Ethylen oder 1-Buten als Comonomer, wobei Random- als auch Blockcopolymere eingesetzt werden können. Darüber hinaus kann das Polypropylen auch schlagzähmodifiziert sein, beispielsweise dem Stand der Technik entsprechend mittels Ethylen-Propylen-Kautschuk (EPM) oder EPDM.

Auch das Polyolefin der Schicht I ist dann, wenn der Haftvermittler der Schicht II selbst kein Polyolefin in ausreichender Menge enthält, vorzugsweise haftungsmodifiziert in dem Sinne, dass funktionelle Gruppen vorhanden sind, die mit Aminogruppen des Haftvermittlers reagieren können. Geeignete funktionelle Gruppen sind in erster Linie Carboxylgruppen, Carbonsäureanhydridgruppen, Carbonatgruppen, Acyllactamgruppen, Oxazolingruppen, Oxazingruppen, Oxazinongruppen, Carbodiimidgruppen oder Epoxidgruppen.

Die funktionellen Gruppen werden, dem Stand der Technik entsprechend, durch Umsetzung mit olefinisch ungesättigten funktionellen Verbindungen wie beispielsweise Acrylsäure, Maleinsäure, Fumarsäure, Maleinsäuremonobutylester, Maleinsäureanhydrid, Aconitsäureanhydrid, Itaconsäureanhydrid oder Vinyloxazolin, im allgemeinen radikalisch und/oder thermisch, auf die Polyolefinkette aufgepfropft, oder sie werden durch radikalische Copolymerisation der olefinisch ungesättigten funktionellen Verbindungen mit dem Olefin in die Hauptkette eingebaut.

Beim Pfropfcopolymer der Komponente II.a) liegt die Aminogruppenkonzentration bevorzugt im Bereich von 100 bis 2 500 mmol/kg.

Als Polyamin können beispielsweise folgende Substanzklassen verwendet werden:
- Polyvinylamine (Römpp Chemie Lexikon, 9. Auflage, Band 6, Seite 4921, Georg Thieme Verlag Stuttgart 1992);
- Polyamine, die aus alternierenden Polyketonen hergestellt werden (DE-OS 196 54 058);
- Dendrimere wie beispielsweise
   ((H₂N-(CH₂)₃)₂N-(CH₂)₃)₂-N(CH₂)₂-N((CH₂)₂-N((CH₂)₃-NH₂)₂)₂
   (DE-A-196 54 179) oder
   Tris(2-aminoethyl)amin, N,N-Bis(2-aminoethyl)-N',N'-bis[2-[bis(2-aminoethyl)amino]-ethyl]-1,2-ethandiamin,
   3,15-Bis(2-aminoethyl)-6,12-bis[2-[bis(2-aminoethyl)amino]ethyl]-9-[2-[bis[2-bis(2-aminoethyl)amino]ethyl]amino]ethyl]3,6,9,12,15-pentaazaheptadecan-1,17-diamin (J. M. Warakomski, Chem. Mat. 1992, 4, 1000 - 1004);
- lineare Polyethylenimine, die durch Polymerisation von 4,5-Dihydro-1,3-oxazolen und anschließende Hydrolyse hergestellt werden können (Houben-Weyl, Methoden der Organischen Chemie, Band E20, Seiten 1482 - 1487, Georg Thieme Verlag Stuttgart, 1987);
- verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
   25 bis 46 % primäre Aminogruppen,
   30 bis 45 % sekundäre Aminogruppen und
   16 bis 40 % tertiäre Aminogruppen.

Das Polyamin besitzt im bevorzugten Fall ein zahlenmittleres Molekulargewicht Mₙ von maximal 20 000 g/mol, besonders bevorzugt von maximal 10 000 g/mol und insbesondere bevorzugt von maximal 5 000 g/mol.

Lactame bzw. ω-Aminocarbonsäuren, die als polyamidbildende Monomere eingesetzt werden, enthalten 4 bis 19 und insbesondere 6 bis 12 Kohlenstoffatome. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin/Adipinsäure, Hexamethylendiamin/Dodecandisäure, Octamethylendiamin/Sebacinsäure, Decamethylendiamin/Sebacinsäure, Decamethylendiamin/Dodecandisäure, Dodecamethylendiamin/Dodecandisäure und Dodecamethylendiamin/2,6-Naphthalindicarbonsäure. Daneben können aber auch alle anderen Kombinationen eingesetzt werden wie Decamethylendiamin/Dodecandisäure/Terephthalsäure, Hexamethylendiamin/Adipinsäure/Terephthalsäure, Hexamethylendiamin/Adipinsäure/Caprolactam, Decamethylendiamin/Dodecandisäure/ω-Aminoundecansäure, Decamethylendiamin/Dodecandisäure/Laurinlactam, Decamethylendiamin/Terephthalsäure/Laurinlactam oder Dodecamethylendiamin/2,6-Naphthalindicarbonsäure/Laurinlactam.

In einer bevorzugten Ausführungsform wird das Pfropfcopolymer zusätzlich unter Verwendung einer Oligocarbonsäure hergestellt, die ausgewählt ist aus 0,015 bis etwa 3 Mol-% Dicarbonsäure und 0,01 bis etwa 1,2 Mol-% Tricarbonsäure, jeweils bezogen auf die Summe der übrigen polyamidbildenden Monomere. Bei dieser Bezugnahme wird bei der äquivalenten Kombination von Diamin und Dicarbonsäure jedes dieser Monomere einzeln betrachtet. Auf diese Weise besitzen die polyamidbildenden Monomere insgesamt einen leichten Überschuß an Carboxylgruppen. Wird eine Dicarbonsäure verwendet, setzt man bevorzugt 0,03 bis 2,2 Mol-%, besonders bevorzugt 0,05 bis 1,5 Mol-%, ganz besonders bevorzugt 0,1 bis 1 Mol-% und insbesondere 0,15 bis 0,65 Mol-% zu; verwendet man eine Tricarbonsäure, so nimmt man vorzugsweise 0,02 bis 0,9 Mol-%, besonders bevorzugt 0,025 bis 0,6 Mol-%, ganz besonders bevorzugt 0,03 bis 0,4 Mol-% und inbesondere 0,04 bis 0,25 Mol-%. Durch die Mitverwendung der Oligocarbonsäure wird die Lösemittel- und Kraftstoffbeständigkeit deutlich verbessert, insbesondere die Hydrolyse- und Alkoholysebeständigkeit und die Spannungsrißbeständigkeit, aber auch das Quellungsverhalten und damit verbunden die Dimensionsbeständigkeit sowie die Sperrwirkung gegen Diffusion.

Als Oligocarbonsäure kann jede beliebige Di- oder Tricarbonsäure mit 6 bis 24 C-Atomen eingesetzt werden, beispielsweise Adipinsäure, Korksäure, Azelainsäure, Sebacinsäure, Dodecandisäure, Isophthalsäure, 2,6-Naphthalindicarbonsäure, Cyclohexan-1.4-dicarbonsäure, Trimesinsäure und/oder Trimellitsäure.

Zusätzlich können, falls gewünscht, aliphatische, alicyclische, aromatische, aralkylische und/oder alkylarylsubstituierte Monocarbonsäuren mit 3 bis 50 Kohlenstoffatomen wie z. B. Laurylsäure, ungesättigte Fettsäuren, Acrylsäure oder Benzoesäure als Regler eingesetzt werden. Mit diesen Reglern kann die Konzentration an Aminogruppen verringert werden, ohne die Molekülgestalt zu verändern. Zusätzlich können auf diese Weise funktionelle Gruppen wie Doppel- bzw. Dreifachbindungen etc. eingeführt werden. Es ist aber erwünscht, daß das Pfropfcopolymer einen substantiellen Anteil an Aminogruppen besitzt. Besonders bevorzugt liegt die Aminogruppenkonzentration des Pfropfcopolymers im Bereich von 150 bis 1 500 mmol/kg, insbesondere bevorzugt im Bereich von 250 bis 1 300 mmol/kg und ganz besonders bevorzugt im Bereich von 300 bis 1 100 mmol/kg. Unter Aminogruppen werden hier und im folgenden nicht nur Aminoendgruppen, sondern auch gegebenenfalls vorhandene sekundäre bzw. tertiäre Aminfunktionen des Polyamins verstanden.

Die Herstellung dieser Pfropfcopolymere ist in der EP-A-1 065 048 näher beschrieben.

Als Polyester der Komponente II.b) sowie der Schicht III kommen linear aufgebaute, thermoplastische Polyester infrage. Diese werden durch Polykondensation von Diolen mit Dicarbonsäure bzw. deren polyesterbildenden Derivaten wie Dimethylestern hergestellt. Geeignete Diole haben die Formel HO-R-OH, wobei R einen divalenten, verzweigten oder unverzweigten aliphatischen und/oder cycloaliphatischen Rest mit 2 bis 40, vorzugsweise 2 bis 12, C-Atomen darstellt. Geeignete Dicarbonsäuren haben die Formel HOOC-R'-COOH, wobei R' einen divalenten aromatischen Rest mit 6 bis 20, vorzugsweise 6 bis 12, C-Atomen bedeutet.

Als Beispiel für Diole seien Ethylenglykol, Trimethylenglykol, Tetramethylenglykol, Hexamethylenglykol, Neopentylglykol, Cyclohexandimethanol sowie das C₃₆-Diol Dimerdiol genannt. Die Diole können alleine oder als Diolgemisch eingesetzt werden.

Bis zu 25 Mol-% des genannten Diols können durch ein Polyalkylenglykol mit nachstehender allgemeiner Formel ersetzt sein, 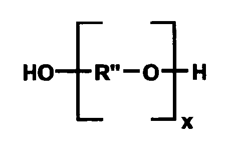 wobei R" einen zweiwertigen Rest mit 2 bis 4 C-Atomen bedeutet und x einen Wert von 2 bis 50 annehmen kann.

Als aromatische Dicarbonsäuren kommen z. B. Terephthalsäure, Isophthalsäure, 1.4-, 1.5-, 2.6- bzw. 2.7-Naphthalindicarbonsäure, Diphensäure und Diphenylether-4.4'-dicarbonsäure infrage. Bis zu 30 Mol-% dieser Dicarbonsäuren können durch aliphatische oder cycloaliphatische Dicarbonsäuren wie z. B. Bernsteinsäure, Adipinsäure, Sebacinsäure, Dodecandisäure oder Cyclohexan-1.4-dicarbonsäure ersetzt sein.

Beispiele für geeignete Polyester sind Polyethylenterephthalat, Polypropylenterephthalat, Polybutylenterephthalat, Polyethylen-2.6-naphthalat, Polypropylen-2.6-naphthalat und Polybutylen-2.6-naphthalat Grundsätzlich können der Polyester der Schicht III sowie der Polyester der Komponente II b) vom gleichen Typ sein. Ist dies nicht der Fall, so werden vorzugsweise Polyester ausgewählt, die miteinander verträglich sind.

Die Herstellung dieser Polyester gehört zum Stand der Technik (DE-OSS 24 07 155, 24 07 156; Ullmanns Encyclopädie der technischen Chemie, 4. Aufl., Bd. 19, Seiten 65 ff., Verlag Chemie, Weinheim, 1980).

Die Polyesterformmasse kann entweder einen dieser Polyester oder mehrere als Gemisch enthalten. Weiterhin können bis zu 40 Gew.-% andere Thermoplaste enthalten sein, sofern diese die Verbundfähigkeit nicht stören, insbesondere schlagzähmachende Kautschuke. Weiterhin kann die Polyesterformmasse die für Polyester üblichen Hilfs- und Zusatzstoffe enthalten wie z. B. Flammschutzmittel, Stabilisatoren, Verarbeitungshilfsmittel, Füllstoffe, insbesondere zur Verbesserung der elektrischen Leitfähigkeit, Verstärkungsfasern, Pigmente oder ähnliches. Die Menge der genannten Mittel ist so zu dosieren, daß die gewünschten Eigenschaften nicht ernsthaft beeinträchtigt werden.

Als Polyamid der Komponente II.c) kommen in erster Linie aliphatische Homo- und Copolyamide in Frage, beispielsweise PA 46, PA 66, PA 68, PA 612, PA 88, PA 810, PA 1010, PA 1012, PA 1212, PA 6, PA 7, PA 8, PA 9, PA 10, PA 11 und PA 12. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleiteten Lactam ausgegangen worden ist; im übrigen sei verwiesen auf H. Domininghaus, Die Kunststoffe und ihre Eigenschaften, Seiten 272 ff., VDI-Verlag, 1976.)

Sofern Copolyamide verwendet werden, können diese z. B. Adipinsäure, Sebacinsäure, Korksäure, Isophthalsäure, Terephthalsäure, Naphthalin-2.6-dicarbonsäure usw. als Cosäure bzw. Bis(4-aminocyclohexyl)methan, Trimethylhexamethylendiamin, Hexamethylendiamin oder Ähnliches als Codiamin enthalten. Lactame wie Caprolactam oder Laurinlactam bzw. Aminocarbonsäuren wie ω-Aminoundecansäure können als Cokomponente ebenfalls eingebaut sein.

Die Herstellung dieser Polyamide ist bekannt (z. B. D. B. Jacobs, J. Zimmermann, Polymerization Processes, S. 424 - 467, Interscience Publishers, New York, 1977; DE-AS 21 52 194).

Darüber hinaus sind als Polyamide auch gemischte aliphatisch/aromatische Polykondensate geeignet, wie sie z. B. in den US-PSS 2 071 250, 2 071 251, 2 130 523, 2 130 948, 2 241 322, 2 312 966, 2 512 606 und 3 393 210 sowie in Kirk-Othmer, Encyclopedia of Chemical Technology, 3. Aufl., Vol. 18, Seiten 328 ff. und 435 ff., Wiley & Sons, 1982, beschrieben werden. Weitere geeignete Polyamide sind Poly(etheresteramide) bzw. Poly(etheramide); derartige Produkte werden z. B. in den DE-OSS 25 23 991, 27 12 987 und 30 06 961 beschrieben.

Hinsichtlich der Polyamid-Endgruppen gibt es keine Beschränkungen. Die besten Ergebnisse werden jedoch in der Regel dann erhalten, wenn die Endgruppen zu mehr als 50 % Aminoendgruppen sind.

Als Fluorpolymer sowie als Polyolefin, die optional als Bestandteil der Komponente II.c) enthalten sein können, können die gleichen Verbindungen verwendet werden wie für die Schicht I. Hierbei gilt, dass dann, wenn die Schicht I aus einer Fluorpolymer-Formmasse besteht, die Komponente II.c) ebenfalls ein Fluorpolymer enthalten kann, vorzugsweise vom gleichen Typ, während die Verwendung eines Polyolefins in der Komponente II.c) in diesem Fall die Schichtenhaftung nicht verbessert.

Analog dazu kann die Komponente II.c) dann, wenn die Schicht I aus einer Polyolefin-Formmasse besteht, ebenfalls ein Polyolefin enthalten, vorzugsweise vom gleichen Typ, während die Verwendung eines Fluorpolymers in der Komponente II.c) in diesem Fall die Schichtenhaftung nicht verbessert.

Das Fluorpolymer bzw. das Polyolefin, das optional in der Komponente II.c) enthalten ist, ist vorzugsweise wie oben beschrieben haftungsmodifiziert. In diesem Fall kann auf eine Haftungsmodifizierung der Formmasse der Schicht I verzichtet werden.

Als Zusatzstoffe der Komponente II.d) können die gleichen verwendet werden wie für die Polyesterformmasse der Schicht III beschrieben.

Neben den Schichten I bis III können im erfindungsgemäßen Verbund noch weitere Schichten enthalten sein, beispielsweise eine mit der Schicht III über einen geeigneten Haftvermittler (Schicht IV) verbundene Schicht V aus einer Polyamidformmasse oder einer Polyolefinformmasse. Hierfür geeignete Haftvermittler sind Stand der Technik. An diese Polyamid- oder Polyolefinschicht kann sich weiterhin eine Ummantelung aus einem Kautschuk oder einem thermoplastischen Elastomeren anschließen. Genauso kann sich an die Innenschicht I eine weitere, innerste Fluorpolymer- bzw. Polyolefinschicht anschließen.

In einer Ausführungsform enthält der Mehrschichtverbund zusätzlich eine Regeneratschicht. Bei der Herstellung erfindungsgemäßer Verbunde fällt immer wieder Abfall an, zum Beispiel vom Anfahrvorgang der Extrusionsanlage oder in Form von Butzen beim Extrusionsblasformen, oder auch beim Konfektionieren von Rohren. Eine Regeneratschicht aus diesen Abfällen wird so zwischen zwei andere Schichten eingebettet, dass eine eventuelle Sprödigkeit des Regeneratblends möglichst weitgehend kompensiert wird.

Beim erfindungsgemäßen Mehrschichtverbund handelt es sich beispielsweise um ein Rohr, einen Einfüllstutzen oder um einen Behälter, insbesondere zur Leitung oder Bevorratung von Flüssigkeiten oder Gasen. Ein derartiges Rohr kann in gerader oder in gewellter Form ausgeführt sein oder es ist nur in Teilabschnitten gewellt. Wellrohre sind Stand der Technik (z. B. US 5 460 771), weshalb sich weitere Ausführungen hierzu erübrigen. Wichtige Einsatzzwecke solcher Mehrschichtverbunde sind die Verwendung als Kraftstoffleitung, als Tankeinfüllstutzen, als Vapor Line (d. h. Leitung, in der Kraftstoffdämpfe geleitet werden, z. B. Entlüftungsleitungen), als Tankstellenleitung, als Kühlflüssigkeitsleitung, als Klimaanlagenleitung oder als Kraftstoffbehälter wie etwa ein Kanister oder ein Tank.

Bei der Verwendung des erfindungsgemäßen Mehrschichtverbundes zur Leitung oder Bevorratung von brennbaren Flüssigkeiten, Gasen oder Stäuben, wie z. B. Kraftstoff oder Kraftstoffdämpfen, empfiehlt es sich, eine der zum Verbund gehörenden Schichten oder eine zusätzliche Innenschicht elektrisch leitfähig auszurüsten. Dies kann durch Compoundieren mit einem elektrisch leitfähigen Zusatz nach allen Methoden des Standes der Technik geschehen. Als leitfähiger Zusatz können beispielsweise Leitruß, Metallflitter, Metallpulver, metallisierte Glaskugeln, metallisierte Glasfasern, Metallfasern (beispielsweise aus rostfreiem Stahl), metallisierte Whiskers, Kohlefasern (auch metallisiert), intrinsisch leitfähige Polymere oder Graphitfibrillen verwendet werden. Es können auch Mischungen verschiedener leitfähiger Zusätze eingesetzt werden.

Im bevorzugten Fall befindet sich die elektrisch leitfähige Schicht in direktem Kontakt mit dem zu führenden oder zu bevorratenden Medium und besitzt einen Oberflächenwiderstand von maximal 10⁹ Ω/square und bevorzugt maximal 10⁶ Ω/square. Die Meßmethode zur Bestimmung des Widerstands von mehrschichtigen Rohren ist in der SAE J 2260 (November 1996, Paragraph 7.9) erläutert.

Die Fertigung des Mehrschichtverbundes kann ein- oder mehrstufig erfolgen, beispielsweise mittels einstufiger Verfahren auf dem Wege des Mehrkomponentenspritzgusses, der Coextrusion, des Coextrusionsblasformens (beispielsweise auch 3D-Blasformen, Schlauchextrusion in eine geöffnete Formhälfte, 3D-Schlauchmanipulation, Saugblasformen, 3D-Saugblasformen, sequentielles Blasformen) oder mittels mehrstufiger Verfahren, wie z. B. Beschichtung.

Die Erfindung wird im Folgenden beispielhaft erläutert.

In den Beispielen wurden folgende Formmassen verwendet:

**Innenschicht (Schicht I):**

| | |
|---|---|
| Fluorpolymer 1: | Mischung gemäß EP-A-0 673 762 aus 95 Gew.-% eines handelsüblichen PVDF und 5 Gew.-% eines Polyglutarimids, das aus folgenden Grundbausteinen aufgebaut ist: |
| | 57 Gew.-% hergeleitet von Methylmethacrylat, |
| | 30 Gew.-% vom N-Methylglutarimid-Typ, |
| | 3 Gew.-% hergeleitet von Methacrylsäure und |
| | 10 Gew.-% vom Glutaranhydrid-Typ |
| | (hergestellt durch Umsetzung von Methylmethacrylat mit einer wässrigen Lösung von Methylamin in der Schmelze). |
| Fluorpolymer 2: | NEOFLON^{®} RP 5000 der Fa. Daikin Industries Ltd., Japan, ein modifiziertes EFEP |
| Fluorpolymer 3: | NEOFLON^{®} RP 5000 AS der Fa. Daikin Industries Ltd., Japan, ein elektrisch leitfähig eingestelltes modifiziertes EFEP |
| Polyolefin 1: | STAMYLAN^{®} P 83 MF 10, ein PP-Copolymer der DSM Deutschland GmbH |
| Polyolefin 2: | VESTOLEN^{®} A 6013, ein PE-HD der DSM Deutschland GmbH |

### Haftvermittler (Schicht II sowie IV):

### Herstellung des Pfropfcopolymers:

9,5 kg Laurinlactam wurden in einem Aufheizkessel bei 180 °C bis 210 °C aufgeschmolzen und in einen druckfesten Polykondensationskessel überführt; anschließend wurden 475 g Wasser und 0,54 g Hypophosphorige Säure zugegeben. Die Lactamspaltung wurde bei 280 °C unter dem sich einstellenden Eigendruck durchgeführt; danach wurde innerhalb von 3 Stunden auf einen Restwasserdampfdruck von 5 bar entspannt und 500 g Polyethylenimin (LUPASOL G 100 der BASF AG, Ludwigshafen) sowie 15 g Dodecandisäure zudosiert.

Beide Komponenten wurden unter dem sich einstellenden Eigendruck eingearbeitet; anschließend wurde auf Atmosphärendruck entspannt und dann 2 Stunden bei 280 °C Stickstoff über die Schmelze geleitet. Die klare Schmelze wurde über eine Schmelzepumpe als Strang ausgetragen, im Wasserbad abgekühlt und anschließend granuliert.

| | |
|---|---|
| HV 1: | 12,6 kg eines PA12 (ηᵣₑₗ = 2,1), 22,82 kg VESTODUR^{®} 3000 (Homopolybutylenterephthalat der Degussa AG mit einer Lösungsviskosität J von 165 cm³/g) und 5,0 kg des Pfropfcopolymers wurden auf einem Doppelschneckenkneter ZE 25 33D der Fa. Berstorff bei 270 °C und 150 U/min sowie einem Durchsatz von 10 kg/h schmelzegemischt, stranggepreßt und granuliert. |
| HV 2: | wie HV 1, mit dem Unterschied, dass das PA12 ersetzt wurde durch maleinsäurean-hydridgepfropftes Polypropylen (ADMER^{®} QB 520 E der Mitsui Chemicals Inc., Japan) |
| HV 3: | wie HV 1, mit dem Unterschied, dass das PA12 ersetzt wurde durch maleinsäurean-hydridgepfropftes Polyethylen (ADMER^{®} NF 408 E der Mitsui Chemicals Inc., Japan) |

### Polyesterschicht (Schicht III):

PES : ein schlagzähmodifiziertes Homopolybutylenterephthalat der Degussa AG

### Außenschicht (Schicht V):

| | |
|---|---|
| PA12: | ein schlagzähmodifiziertes, weichgemachtes Polyamid der Degussa AG (VESTAMID^{®} X 7293) |
| Polyolefin 2: | wie vorstehend |

### Beispiele 1 bis 5:

Auf einer 5-Schichtanlage, die mit zwei 45-er Extrudern und drei 30-er Extrudern ausgerüstet war, wurden Rohre mit den Maßen 8 x 1 mm bei einer Extrusionsgeschwindigkeit von ca. 12 m/min hergestellt.

| Beispiel | Innenschicht = Schicht I | Schicht II | Schicht III | Schicht IV | Schicht V |
|---|---|---|---|---|---|
| 1 | 0,1 mm Fluorpolymer 1 | 0,1 mm HV 1 | 0,3 mm PES | 0,1 mm HV 1 | 0,4 mm PA12 |
| 2 | 0,1 mm Fluorpolymer 2 | 0,1 mm HV 1 | 0,3 mm PES | 0,1 mm HV 1 | 0,4 mm PA12 |
| 3 | 0,1 mm Fluorpolymer 3 | 0,1 mm HV 1 | 0,3 mm PES | 0,1 mm HV 1 | 0,4 mm PA12 |
| 4 | 0,1 mm Polyolefin 1 | 0,1 mm HV 2 | 0,3 mm PES | 0,1 mm HV 1 | 0,4 mm PA12 |
| 5 | 0,1 mm Polyolefin 2 | 0,1 mm HV 3 | 0,3 mm PES | 0,1 mm HV 3 | 0,4 Polyolefin 2 |

### Charakterisierung der Rohre:

Bei den Rohren der Beispiele 1 bis 5 war die Haftung zwischen der Fluorpolymer- bzw. Polyolefin-Innenschicht und der Polyesterschicht sowohl extrusionsfrisch als auch nach Kraftstofflagerung (Innenkontaktlagerung mit CM 15, einem Testkraftstoff aus 42,5 Vol.-% Isooctan, 42,5 Vol.-% Toluol und 15 Vol.-% Methanol, bei 80 °C mit wöchentlichem Kraftstoffwechsel, 1000 h) so hoch, dass der Verbund an dieser Stelle nicht getrennt werden konnte.

Die Bruchquote nach der Kälteschlagzähigkeitsprüfung bei -40 °C nach SAE J 2260 betrug bei allen Rohren, sowohl extrusionsfrisch als auch nach Kraftstofflagerung (Innenkontaktlagerung mit CM 15 bei 80 °C mit wöchentlichem Kraftstoffwechsel, 1000 h) jeweils 0/10.

## Patentansprüche

1. Mehrschichtverbund, der folgende Schichten enthält:
I. Eine innere Schicht I, ausgewählt aus einer Fluorpolymer-Formmasse und einer Polyolefin-Formmasse;
II. eine Haftvermittlerschicht II;
III. eine Schicht III aus einer Polyester-Formmasse,
**dadurch gekennzeichnet,**
**dass** die Haftvermittlerschicht folgende Zusammensetzung aufweist:
a) 2 bis 80 Gew.-Teile eines Pfropfcopolymers, das unter Verwendung folgender Monomere hergestellt wird:
- 0,5 bis 25 Gew.-%, bezogen auf das Pfropfcopolymer, eines Polyamins mit mindestens 4 Stickstoffatomen sowie
- polyamidbildende Monomere, ausgewählt aus Lactamen, ω-Aminocarbonsäuren und/oder äquimolaren Kombinationen von Diamin und Dicarbonsäure;
b) 0 bis 85 Gew.-Teile eines Polyesters,
c) 0 bis 85 Gew.-Teile eines Polymeren, ausgewählt aus Polyamiden, Fluorpolymeren und Polyolefinen,
wobei die Summe der Gew.-Teile von a), b) und c) 100 ergibt;
d) maximal 50 Gew.-Teile Zusatzstoffe, ausgewählt aus schlagzähmachendem Kautschuk und/oder üblichen Hilfs- bzw. Zuschlagstoffen.

2. Mehrschichtverbund gemäß Anspruch 1,
**dadurch gekennzeichnet, dass**
- die Komponente II.a) zu 4 bis 60 Gew.-Teilen und/oder
- die Komponente II.b) zu 10 bis 75 Gew.-Teilen enthalten ist.

3. Mehrschichtverbund gemäß Anspruch 1,
**dadurch gekennzeichnet, dass**
- die Komponente II.a) zu 6 bis 40 Gew.-Teilen und/oder
- die Komponente II.b) zu 25 bis 65 Gew.-Teilen enthalten ist.

4. Mehrschichtverbund gemäß einem der vorhergehenden Ansprüche,
**dadurch gekennzeichnet,**
**dass** von der Komponente II.c) 5 bis 75 Gew.-Teile enthalten sind.

5. Mehrschichtverbund gemäß Anspruch 4,
**dadurch gekennzeichnet,**
**dass** von der Komponente II.c) 10 bis 65 Gew.-Teile enthalten sind.

6. Mehrschichtverbund gemäß Anspruch 4,
**dadurch gekennzeichnet,**
**dass** von der Komponente II.c) 20 bis 55 Gew.-Teile enthalten sind.

7. Mehrschichtverbund gemäß einem der Ansprüche 1 bis 6,
**dadurch gekennzeichnet,**
**dass** als Fluorpolymer ausgewählt ist aus der Gruppe PVDF, ETFE, mit Hilfe einer Terkomponente modifiziertes ETFE, E-CTFE, PCTFE, THV, FEP und PFA.

8. Mehrschichtverbund gemäß einem der Ansprüche 1 bis 6,
**dadurch gekennzeichnet,**
**dass** als Polyolefin Polyethylen oder isotaktisches Polypropylen eingesetzt wird.

9. Mehrschichtverbund gemäß einem der vorhergehenden Ansprüche,
**dadurch gekennzeichnet,**
**dass** das Fluorpolymer bzw. das Polyolefin haftungsmodifiziert ist.

10. Mehrschichtverbund gemäß einem der vorhergehenden Ansprüche,
**dadurch gekennzeichnet,**
**dass** der Polyester ausgewählt ist aus Polyethylenterephthalat, Polypropylenterephthalat, Polybutylenterephthalat, Polyethylen-2.6-naphthalat, Polypropylen-2.6-naphthalat und Polybutylen-2.6-naphthalat.

11. Mehrschichtverbund gemäß einem der vorhergehenden Ansprüche,
**dadurch gekennzeichnet,**
**dass** er zusätzlich eine mit der Schicht III über einen geeigneten Haftvermittler verbundene Schicht aus einer Polyamidformmasse oder einer Polyolefinformmasse besitzt.

12. Mehrschichtverbund gemäß einem der vorhergehenden Ansprüche,
**dadurch gekennzeichnet,**
**dass** er ein Rohr oder ein Hohlkörper ist.

13. Mehrschichtverbund gemäß einem der vorhergehenden Ansprüche,
**dadurch gekennzeichnet,**
**dass** er ein Rohr ist, das vollständig oder in Teilbereichen gewellt ist.

14. Mehrschichtverbund gemäß einem der vorhergehenden Ansprüche,
**dadurch gekennzeichnet,**
**dass** er eine Kraftstoffleitung, eine Bremsflüssigkeitsleitung, eine Kühlflüssigkeitsleitung, eine Hydraulikflüssigkeitsleitung, eine Tankstellenleitung, eine Klimaanlagenleitung, eine Vapor Line, ein Behälter oder ein Einfüllstutzen ist.

15. Mehrschichtverbund gemäß einem der vorhergehenden Ansprüche,
**dadurch gekennzeichnet,**
**dass** eine der zum Verbund gehörenden Schichten oder eine zusätzliche Innenschicht elektrisch leitfähig ausgerüstet ist.

16. Mehrschichtverbund gemäß einem der vorhergehenden Ansprüche,
**dadurch gekennzeichnet,**
**dass** er durch Coextrusion, Beschichtung, Mehrkomponentenspritzgießen oder Coextrusionsblasformen hergestellt wird.

## Claims

1. Multilayer composite comprising the following layers:
I. an inner layer I selected from among a fluoropolymer molding composition and a polyolefin molding composition;
II. a bonding layer II;
III. a layer III of a polyester molding composition **characterized in that** the bonding layer has the following composition:
a) from 2 to 80 parts by weight of a graft copolymer prepared using the following monomers:
- from 0.5 to 25% by weight, based on the graft copolymer, of a polyamine having at least 4 nitrogen atoms, and
- polyamide-forming monomers selected from among lactams, ω-aminocarboxylic acids and equimolar combinations of diamine and dicarboxylic acid;
b) from 0 to 85 parts by weight of a polyester,
c) from 0 to 85 parts by weight of a polymer selected from among polyamides, fluoropolymers and polyolefins,
where the sum of the parts by weight of a), b) and c) is 100;
d) not more than 50 parts by weight of additives selected from among impact-modifying rubber and customary auxiliaries and additives.

2. Multilayer composite according to Claim 1, **characterized in that**
- the component II.a) is present in an amount of from 4 to 60 parts by weight and/or
- the component II.b) is present in an amount of from 10 to 75 parts by weight.

3. Multilayer composite according to Claim 1, **characterized in that**
- the component II.a) is present in an amount of from 6 to 40 parts by weight and/or
- the component II.b) is present in an amount of from 25 to 65 parts by weight.

4. Multilayer composite according to any of the preceding claims, **characterized in that** from 5 to 75 parts by weight of the component II.c) are present.

5. Multilayer composite according to Claim 4, **characterized in that** from 10 to 65 parts by weight of the component II.c) are present.

6. Multilayer composite according to Claim 4, **characterized in that** from 20 to 55 parts by weight of the component II.c) are present.

7. Multilayer composite according to any of Claims 1 to 6, **characterized in that** the fluoropolymer is selected from the group consisting of PVDF, ETFE, ETFE modified by means of a third component, E-CTFE, PCTFE, THV, FEP and PFA.

8. Multilayer composite according to any of Claims 1 to 6, **characterized in that** polyethylene or isotactic polypropylene is used as polyolefin.

9. Multilayer composite according to any of the preceding claims, **characterized in that** the fluoropolymer or the polyolefin is adhesion-modified.

10. Multilayer composite according to any of the preceding claims, **characterized in that** the polyester is selected from among polyethylene terephthalate, polypropylene terephthalate, polybutylene terephthalate, polyethylene 2,6-naphthalate, polypropylene 2,6-naphthalate and polybutylene 2,6-naphthalate.

11. Multilayer composite according to any of the preceding claims, **characterized in that** it additionally has a layer of a polyamide molding composition or a polyolefin molding composition which is joined via a suitable bonding agent to the layer III.

12. Multilayer composite according to any of the preceding claims, **characterized in that** it is a pipe or a hollow body.

13. Multilayer composite according to any of the preceding claims, **characterized in that** it is a pipe which is corrugated in its entirety or in subregions.

14. Multilayer composite according to any of the preceding claims, **characterized in that** it is a fuel line, a brake fluid line, a cooling fluid line, a hydraulic fluid line, a filling station line, an air conditioner line, a vapor line, a container or a filling port.

15. Multilayer composite according to any of the preceding claims, **characterized in that** one of the layers of the composite or an additional inner layer has been made electrically conductive.

16. Multilayer composite according to any of the preceding claims, **characterized in that** it has been produced by coextrusion, coating, multicomponent injection molding or coextrusion blow molding.

## Revendications

1. Assemblage à plusieurs couches qui contient les couches suivantes :
I. une couche interne I, choisie parmi une masse de moulage en polymère fluoré et une masse de moulage en polyoléfine ;
II. une couche de promoteur d'adhérence II ;
III. une couche III en une masse de moulage en polyester,
**caractérisé en ce que** la couche de promoteur d'adhérence présente la composition suivante :
a) 2 à 80 parties en poids d'un copolymère greffé qui est préparé en utilisant les monomères suivants :
- 0,5 à 25% en poids, par rapport au copolymère greffé, d'une polyamine comprenant au moins 4 atomes
ainsi que
- des monomères formant du polyamide, choisis parmi les lactames, les acides ω-aminocarboxyliques et/ou les combinaisons équimolaires de diamine et d'acide dicarboxylique ;
b) 0 à 85 parties en poids d'un polyester,
c) 0 à 85 parties en poids d'un polymère, choisi parmi les polyamides, les polymères fluorés et les polyoléfines, la somme des parties en poids de a), b) et c) étant toujours égale 100 ;
d) au maximum 50% en poids d'additifs, choisis parmi le caoutchouc qui confère une résilience et/ou des auxiliaires ou additifs usuels.

2. Assemblage à plusieurs couches selon la revendication 1, **caractérisé en ce que**
- le composant II.a) est contenu à raison de 4 à 60 parties en poids et/ou
- le composant II.b) est contenu à raison de 10 à 75 parties en poids.

3. Assemblage à plusieurs couches selon la revendication 1, **caractérisé en ce que**
- le composant II.a) est contenu à raison de 6 à 40 parties en poids et/ou
- le composant II.b) est contenu à raison de 25 à 65 parties en poids.

4. Assemblage à plusieurs couches selon l'une quelconque des revendications précédentes, **caractérisé en ce que** 5 à 75 parties en poids du composant II.c) sont contenues.

5. Assemblage à plusieurs couches selon la revendication 4, **caractérisé en ce que** 10 à 65 parties en poids du composant II.c) sont contenues.

6. Assemblage à plusieurs couches selon la revendication 4, **caractérisé en ce que** 20 à 55 parties en poids du composant II.c) sont contenues.

7. Assemblage à plusieurs couches selon l'une quelconque des revendications 1 à 6, **caractérisé en ce que** le polymère fluoré est choisi dans le groupe formé par PVDF, ETFE, ETFE modifié par un troisième composant, E-CTFE, PCTFE, THV, FEP et PFA.

8. Assemblage à plusieurs couches selon l'une quelconque des revendications 1 à 6, **caractérisé en ce qu'**on utilise comme polyoléfine du polyéthylène ou du polypropylène isotactique.

9. Assemblage à plusieurs couches selon l'une quelconque des revendications précédentes, **caractérisé en ce que** le polymère fluoré ou, selon le cas, la polyoléfine est modifié(e) en adhérence.

10. Assemblage à plusieurs couches selon l'une quelconque des revendications précédentes, **caractérisé en ce que** le polyester est choisi parmi le poly(téréphtalate d'éthylène), le poly(téréphtalate de propylène), le poly(téréphtalate de butylène), le poly(2,6-naphtalate d'éthylène), poly(2,6-naphtalate de propylène) et poly(2,6-naphtalate de butylène).

11. Assemblage à plusieurs couches selon l'une quelconque des revendications précédentes, **caractérisé en ce qu'**il présente en outre une couche assemblée via un promoteur d'adhérence approprié avec la couche III en une masse de moulage en polyamide ou une masse de moulage en polyoléfine.

12. Assemblage à plusieurs couches selon l'une quelconque des revendications précédentes, **caractérisé en ce qu'**il s'agit d'un tuyau ou d'un corps creux.

13. Assemblage à plusieurs couches selon l'une quelconque des revendications précédentes, **caractérisé en ce qu'**il s'agit d'un tuyau qui est complètement strié ou strié dans des zones partielles.

14. Assemblage à plusieurs couches selon l'une quelconque des revendications précédentes, **caractérisé en ce qu'**il s'agit d'une conduite pour carburant, d'une conduite pour liquide de frein, d'une conduite pour liquide de refroidissement, d'une conduite pour liquide hydraulique, d'une conduite pour station-service, d'une conduite pour climatisation, d'une canalisation à vapeur, d'un récipient ou d'une tubulure de remplissage.

15. Assemblage à plusieurs couches selon l'une quelconque des revendications précédentes, **caractérisé en ce qu'**une des couches appartenant à l'assemblage ou une couche interne supplémentaire est apprêtée de manière électriquement conductrice.

16. Assemblage à plusieurs couches selon l'une quelconque des revendications précédentes, **caractérisé en ce qu'**il est produit par coextrusion, revêtement, moulage par injection à plusieurs composants ou moulage par coextrusion et soufflage.
